# EUROPÄISCHE PATENTSCHRIFT

(11) **EP 0 531 622 B1**
(45) Veröffentlichungstag und Bekanntmachung des Hinweises auf die Patenterteilung: **19.04.1995**
(21) Anmeldenummer: 92108466.1
(22) Anmeldetag: 20.05.1992
(51) Int. Cl.: C10C 3/00, C08L 95/00

(54) **Verfahren zur Wiederverwendung von Reststoffen bituminöser Dichtungsmaterialien**
Method for recycling waste products of bituminous waterproofing materials
Méthode pour le recyclage des résidus des matériaux d'étanchéité bitumineux

(30) Priorität: 23.08.1991 DE 4128014
(43) Veröffentlichungstag der Anmeldung: 17.03.1993
(73) Patentinhaber: VEDAG GmbH, 60388 Frankfurt (DE)
(72) Erfinder: Vogel, Hans-Günter, W-6236 Eschborn 2 (DE); Heep, Werner, W-6000 Frankfurt/Main (DE); Scherp, Ernst, W-6454 Bruchköbel (DE); Debus, Klaus Kurt, W-6000 Frankfurt/Main (DE)
(74) Vertreter: Berkenfeld, Helmut, Dipl.-Ing.

(56) Entgegenhaltungen:
- EP-A- 0 182 937
- US-A- 2 368 371
- US-A- 4 325 641
- US-A- 4 706 893
- US-A- 4 726 846

## Beschreibung

Die Erfindung betrifft ein Verfahren zur Aufarbeitung von Reststoffen bituminöser Dichtungsmaterialien wie Dachbahnen, Abdichtungsfolien, Unterspannbahnen und Schindeln und die Wiederverwendung der aufgearbeiteten Werkstoffe.

Bei der Herstellung und Verlegung dieser Dichtungsmaterialien und bei der Erneuerung von Abdichtungen fallen erhebliche Mengen von Reststoffen an, die neben bituminösen Stoffen auch Gewebe oder Vliese aus organischen und anorganischen Fasern, Metall- und Kunststoffolien und mineralische Stoffe als Füller oder Abstreuung enthalten können. Die bituminösen Stoffe bestehen häufig aus mit Elastomeren, klebrig machenden Harzen und Thermoplasten modifizierten Bitumina. Um diese Reststoffe nicht deponieren zu müssen, wurde bereits vorgeschlagen, sie zu verbrennen oder bei der Herstellung von Asphalt für den Straßenbau zu verwenden (C.A. 101:215523n).

So können beispielsweise in einer Hammermühle zerkleinerte Schindeln in einer Menge von bis zu 18,5 Gew.-% dem Asphalt zugesetzt werden (C.A. 106:107036a). Für die Zerkleinerung in Hammermühlen ist ein sprödes Material erforderlich, das jedoch nur in seltenen Fällen vorliegt. Unzerkleinertes Material läßt sich nicht verwenden. Das gilt in ähnlicher Weise auch für die Verbrennung. Aus diesem Grunde wurde auch vorgeschlagen, das Bitumen aus den Reststoffen mit Heizöl zu extrahieren, um ein schwereres Heizöl zu gewinnen. Die Feststoffe müssen dann allerdings auf einer Deponie entsorgt werden (C.A. 106:87299h). In der GB 1 558 320 wird ein anderes Trennverfahren beschreiben. Die Reststoffe von bituminösen Dachbahnen werden bis unterhalb des Erweichungspunktes gekühlt und in einer Schlagmühle bis auf weniger als 10 mm zerkleinert. Durch Flotation in Wasser werden Fasern und Bitumen von mineralischen Stoffen getrennt. Das Faser-Bitumen-Gemisch wird getrocknet, erhitzt, um das Bitumen zu schmelzen, und anschließend filtriert, um das Bitumen zu gewinnen. Das Fasermaterial kann anschließend durch Extraktion mit Lösungsmitteln noch von anhaftendem Bitumen befreit werden. Die Verwendung der Feststoffe wird nicht beschrieben.

In der US 4,222,851 wird ein Extraktionsverfahren beschrieben, das es ermöglicht, aus alten Bitumenschindeln Bitumen, Fasern und Mineralstoffe in wiederverwendbarer Form zu gewinnen. Die Reststoffe werden bis auf eine Größe von etwa 75 x 75 mm zerkleinert und in mehreren Stufen mit einer Heptanfraktion extrahiert. Fasern, Füllstoffe und Granulat werden über Siebe getrennt gewonnen. Aus der Bitumenlösung wird das Lösungsmittel abgedampft und in den Prozeß zurückgeführt. Das Verfahren ist sehr aufwendig, gestattet aber eine vollständige Wiedergewinnung der Rohststoffe.

Ein anderes Extraktionsverfahren für Dachbahnen mit Rohfilzeinlagen und Metallfolien ist in der US 4,330,340 beschrieben. Die auf etwa 300 mm zerkleinerten Reststoffe werden in heißem Bitumen gelöst. Metalle, Fasern und Mineralstoffe werden jeweils für sich abgetrennt. Die bitumenhaltigen Faserstoffe werden zu Brennstoffbriketts verpreßt, Mineralstoffe können im Straßenbau verwendet werden. Auch der Metallschrott und das Bitumen sind wiederverwendbar. Falls bei den Feststoffen das anhaftende Bitumen bei der Weiterverarbeitung nicht stört, kann auf Lösungsmittel und deren Rückgewinnung verzichtet werden. Dadurch vereinfacht sich das Verfahren, ist aber durch die vielen Trennschritte immer noch sehr aufwendig.

Ein weiteres Extraktionsverfahren mit Lösungsmitteln wird in der DD 264 016 A1 beschrieben. Das zurückgewonnene Bitumen ist für die Herstellung von Dachbelägen und ähnlichen Baumaterialien geeignet.

Wie aus dem Stand der Technik ersichtlich, wird bei den bekannten Verfahren vor allem die Rückgewinnung des Bitumens angestrebt. Teilweise ist auch eine sinnvolle Verwendung der Feststoffe vorgesehen, wobei diese sortenrein gewonnen werden müssen. Dadurch werden diese Verfahren aber sehr aufwendig. In der Hauptsache werden Extraktionsverfahren mit arteigenen oder leichtsiedenden Lösungsmitteln vorgeschlagen, bei denen die Reststoffe möglichst wenig zerkleinert werden müssen, da die bituminösen Stoffe durch die Temperaturerhöhung beim Zerkleinern klebrig werden und dann nicht mehr handhabbar sind.

In der US-A 2,368,371 wird vorgeschlagen, Bitumenschindeln und ähnliche bituminöse Produkte in einer Hammermühle oder einer ähnlichen Zerkleinerungsvorrichtung bei Raumtemperatur zu zerkleinern und das vorzerkleinerte Material zu sieben. Der Siebrückstand wird mit einem mineralischen Füllstoff und dem Rückstand der letzten Siebstufe in mehreren Stufen weiter zerkleinert und gesiebt, wobei die Siebrückstände der jeweils nächsten Stufe zugeführt werden und die zusammengefaßten Siebdurchgänge mit heißem Bitumen homogen vermischt werden. Das Gemisch wird zur Herstellung neuer Schindeln verwendet, nachdem ggf. die darin enthaltenen mineralischen Granulate aufgemahlen wurden. Zum Anmeldezeitpunkt bestanden Bitumenschindeln aus einer mit Bitumen getränkten Rohfilzeinlage, einer bituminösen Deckmasse und einer beidseitigen mineralischen Abstreuung. Wegen ihrer Sprödigkeit ließen sich solche Schindeln leicht in Hammermühlen zerkleinern. Reststoffe bituminöser Dichtungsmaterialien mit reißfesten Einlagen aus Glasfasern und Polyesterfasern und Deckmassen auf der Basis von elastomer- bzw. polymermodifiziertem Bitumen mit teilweise kaltselbstklebenden Eigenschaften lassen sich so nicht aufarbeiten. Es bestand daher die Aufgabe, dieses Verfahren so weiterzuentwickeln, daß auch Reststoffe solcher Dichtungsmaterialien aufgearbeitet und wiederverwendet werden können.

Die Aufgabe wird erfindungsgemäß dadurch gelöst, daß die Vorzerkleinerung der Reststoffe auf eine Größe von maximal 10 x 10 cm in einer Schneidmühle oder Rotorschere durchgeführt wird, wobei die vorzerkleinerten Reststoffe durch Sieben in Vorschnitzel, Fertigschnitzel und Abrieb aufgetrennt werden, um die mit Trennmittel eingepuderten Vorschnitzel in die Vorzerkleinerung zurückgeführt werden, um die Schmelze auf eine Siebfeinheit von maximal 0,2 mm gemahlen wird.

Die Reststoffe werden vorzugsweise auf eine Größe von maximal 3 x 3 cm vorzerkleinert. Als Reststoffe von Dichtungsmaterialien können solche von bituminösen Dichtungsbahnen mit oder ohne Trägereinlage aus Vliesen oder Geweben von mineralischen Fasern, Kunststoff- oder Naturfasern aufgearbeitet werden, die mit Papieren oder Folien aus Kunststoff oder Metall ausgerüstet sind oder eine mit Mineralstoffen abgestreute Oberfläche haben. Ihre bituminösen Massen können jegliche Art von Füllstoffen enthalten und mit Elastomeren, Harzen und thermoplastischen Kunststoffen modifiziert sein. Sie können aus der Fertigung stammen oder bei Erneuerungsarbeiten anfallen. Im letzteren Fall sind sie sorgfältig getrennt von anderem Bauschutt aufzubewahren.

Neben flächigen Dichtungsmaterialien mit ihren anhaftenden Klebern, können natürlich auch Reste von bituminösen Spachtelmassen, Kleber, Kitte und Fugenvergußmassen aufgearbeitet werden. Dabei kann im allgemeinen die Vorzerkleinerung entfallen.

Die Vorzerkleinerung ist insbesondere bei bituminösem Dichtungsmaterial mit hoher Plastizitätsspanne sehr kritisch, da diese Produkte auch noch bei niedrigen Temperaturen von bis zu -30°C ein viscoelastisches Verhalten zeigen. Das gilt auch für Bahnen mit selbstklebender bituminöser Beschichtung. Als Zerkleinerungsvorrichtung kann daher nur eine solche Verwendung finden, bei der nur wenig kinetische Energie an das zu zerkleinernde Produkt übertragen wird. Besonders geeignet sind hier Schneidmühlen oder Rotorscheren. Aber auch diese Vorrichtungen erwärmen das Material , so daß es zu Klumpenbildung und Verstopfungen kommen kann. Ein Tiefkühlen des Materials oder das Eindüsen von wässrigen Lösungen schafften hier zwar Abhilfe, gestaltet das Verfahren aber zu aufwendig. Die Zugabe pulverförmiger Trennmittel löst das Problem ebenfalls nur unvollständig, ebensowenig wie die Verringerung der Durchlaufzeit durch die Mühle durch Erweiterung der Siebteilung, obwohl durch diese Maßnahme die Funktionstüchtigkeit der Schneidmühlen erheblich verlängert wird. Überraschenderweise wurde nun gefunden, daß durch eine Rückführung ausgesiebter, grober und gepuderter Schnitzel diese nicht nur auf die gewünschte Endgröße zerkleinert werden, sondern auch den Mahlraum von entstehenden Anbackungen reinigen. Aus diesem Grunde werden die Schnitzel mit geeigneten Sieben in drei Fraktionen aufgeteilt:
Vorschnitzel , Fertigschnitzel und Materialabrieb einschließlich Trennpulver.

Der Materialabrieb kann ggf. zusammen mit dem Staub aus der Filteranlage der pneumatischen Schnitzelförderung entweder in die Schneidmühle zurückgeführt oder den Fertigschnitzeln zugemischt werden.

Diese Vorgehensweise ist natürlich nur bei Reststoffen erforderlich, die zum Zusammenbacken neigen. Bei spröderen Materialien kann diese Zerkleinerung auch ohne Rückführung der Vorschnitzelfraktion durchgeführt werden. Da für die weitere Aufarbeitung eine geringe Schnitzelgröße vorteilhaft ist, können auch zwei Schneidmühlen hintereinander geschaltet sein.

Die Fertigschnitzel werden ggf. nach Zwischenlagerung aufgeschmolzen und dabei soweit homogenisiert, bis eine pumpfähige Masse entsteht. Die Aufschmelzvorrichtung kann beispielsweise ein Rührkessel mit einem Dissolver oder Hochleistungsmischer aber auch ein Kneter oder Extruder sein. Um den Aufschmelzvorgang zu erleichtern, kann es sinnvoll sein, bei absatzweisem Betrieb einen Rest der Schmelze aus dem vorangegangenen Aufschmelzvorgang im Rührkessel zu belassen oder flüssiges Bitumen vorzulegen. Durch die Scherkräfte werden die Faserstoffe von Einlagen der Dichtungsbahnen aufgelockert und zerfasert.

Die so erhaltene pumpfähige Masse wird ein oder mehrere Male über ein Heißmahlaggregat geführt, bis die gewünschte Feinheit der Feststoffe erreicht ist. Geeignete Heißmahlaggregate sind beispielsweise Coloid-Mühlen, Zahnscheibenmühlen und Korundscheibenmühlen.

Die gemahlene Masse wird nun in einem Rührwerksbehälter homogenisiert und ggf. mit Zusätzen wie Bitumen, Thermoplasten, Elastromeren, Harzen und Verdünnungsmitteln gemischt, um die gewünschte Qualität einzustellen.

Viele Dachbahnenanlagen verfügen neben mehreren Rührwerken auch über Heißmahlaggregate, beispielsweise für das homogene Einmischen von SBS-Granulat. Es ist daher sinnvoll , die bituminösen Reststoffe zunächst nur zu Schnitzeln vorzuverkleinern und anschließend, ggf. an anderer Stelle in den vorhandenen Anlagen weiter zu verarbeiten, zumal diese Anlagen mit Abfüllvorrichtungen oder Anlagen zur Fertigung von Dichtungsbahnen und ähnlichem direkt verbunden sind. Dadurch werden nicht nur Anlagenkosten sondern unter Umständen auch Energie für das Wiederaufschmelzen der fertigen Massen eingespart.

Die Erfindung wird anhand der nachfolgenden Beispiele näher erläutert:

### Belspiel 1

Ein schadhafter nicht wärmegedämmter bituminöser Dachaufbau bestend aus einer streifenweise mit einem bituminösen Kaltkleber aufgeklebten, eine Aluminiumfolie und ein Glasvlies enthaltenden bituminösen Dampfsperre und einer aufgeschweißten Dachbahn mit einer Polyesterfaservlies-Einlage und mit Schiefersplitt abgestreuter Deckmasse aus Polymer-Bitumen wird erneuert. Dabei fallen Reststoffe in Form unregelmäßiger Stücke des alten Dachaufbaus an. Diese Reststoffe werden in einer Schneidmühle mit groben Auslaßsieb unter Zugabe eines pulvrigen Trennmittels zerkleinert und die erhaltenen Schnitzel in einem Schwingsieb mit einer Maschenweite des oberen Siebes von 30 x 30 mm und einer Maschenweite des unteren Siebs von 2 x 2 mm in drei Fraktionen zerlegt: den Vorschnitzeln, den Fertigschnitzeln und dem Abrieb einschließlich Pulverüberschuß. Die Fertigschnitzel werden über eine pneumatische Förderleitung mit Zyklonabscheider in einen mit Thermalöl beheizbaren und mit einem Dissolver ausgerüsteten Schmelzkessel gefördert. Die Abluft wird gefiltert und der Filterstaub zusammen mit dem Abrieb und den Vorschnitzeln in die Schneidmühle zurückgeführt und dort zusammen mit weiteren Reststoffen zerkleinert. Der Filterstaub und der Abrieb pudern dabei die Schnittstellen und Kleberflächen ab und vermindern damit ebenfalls die Gefahr des Zusammenbackens. Die groben Vorschnitzel werden außerdem weiter zerkleinert und verhindern ein Anbacken im Mahlraum.

Die Fertigschnitzel werden bei ca. 200 °C aufgeschmolzen und mit Hilfe des Dissolvers homogenisiert. Dabei werden die Vlieseinlagen zerfasert. Anschließend wird die Masse über eine Zahnscheibenmühle umgepumpt. Die so erhaltene Masse hat folgende Eigenschaften:
Gehalt an mit Polymeren modifiziertem Bitumen:
59 Gew.-%
mit einem Erweichungspunkt (Ring und Kugel)
von 92 °C und einer Penetration von 34 x 10⁻¹ mm
Gehalt an Faserstoffen: 3 Gew.-%
mit einer maximalen Faserlänge von 0,9 mm
Gehalt an mineralischen Füllstoffen und Metallpulver:
38 Gew.-%
mit einem maximalen Korndurchmesser von 90 »m
Die Masse kann direkt als Heißklebemasse, z. B. zum Verkleben von Metallriffelblechen verwendet werden.

### Belspiel 2

70 Gew.-Teile der im Beispiel 1 erhaltenen Masse werden in einem beheizten Mischbehälter mit 30 Gew.-Teilen eines Gemisches aus 85 Gew.-% Primärbitumen mit einer Penetration von 200 bis 300 x 10⁻¹ mm und 14 Gew.-% SBS-Kautschuk homogen gemischt. Die erhaltene Masse wird abgefüllt und gekühlt. Sie kann als Fugenvergußmasse verwendet werden.

### Beispiel 3

80 Gew.-Teile der im Beispiel 1 erhaltenen Masse werden 20 Gew.-Teilen eines Masterbatches aus 85 Gew.-% Primärbitumen mit einer Penetration von 200 bis 300 x 10⁻¹ mm und 15 Gew.-% eines SBS-Blockpolymers zugegeben und homogenisiert. Die Masse kann als Deckbeschichtung zur Herstellung von Dachbahnen eingesetzt werden.

### Beispiel 4

Nicht verkaufsfähige Minderqualitäten aus der Produktion von Polymerbitumen-Dachbahnen mit Polyesterfaservlies-Einlage werden wie im Beispiel 1 aufgearbeitet. Die dabei erhaltene Masse hat folgende Eigenschaften:
Gehalt an Polymerbitumen: 60 Gew.-%
mit einem Erweichungspunkt (Ring und Kugel) von 12°C
und einer Penetration von 4 x 10⁻¹ mm.
Gehalt an Faserstoffen: 4 Gew.-%
mit einer maximalen Faserlänge von 0,8 mm
Gehalt an mineralischen Füllstoffen: 36 Gew.-%
mit einem maximalen Korndurchmesser von 85 »m.

70 Gew.-Teile dieser Masse werden mit 30 Gew.-Teilen eines Masterbatches aus 74 Gew.-% Primärbitumen mit einer Penetration von 500 bis 800 x 10⁻¹ mm, 6 Gew.-% Polyolefinen, 5 Gew.-% organischen Faserpulp, 10 Gew.-% Balsamharz und 5 Gew. -% SBS-Kautschuk im Rührwerksbehälter gemischt. Die so modifizierte Masse kann als leicht schmelzbare oder kaltklebende Masse bei der Herstellung von Dichtungsbahnen für Bauwerksabdichtungen eingesetzt werden.

### Beispiel 5

Wie in den Beispielen gezeigt, lassen sich Reststoffe bituminöser Dichtungsmaterialien in einfacher Weise so aufarbeiten, daß sie vollständig bei der Herstellung neuer Dichtungsmaterialien, bituminöser Kleber und ähnlichem wiederverwendet werden können. Zur Einstellung der gewünschten Eigenschaften sind hierzu häufig nur relativ geringe Mengen von Bitumen, Harzen, Thermoplasten, Elastomeren, Lösungsmitteln oder deren Gemische erforderlich. Eine Auftrennung nach Inhaltsstoffen ist nicht erforderlich.

Bahnen mit Bestreuungsfehlern, außermittigen Einlagen oder unsauberen Rändern und ähnlichen Mängeln können wie beschrieben aufgearbeitet und direkt bis zu 30 Gew.-% ohne Korrektur der Rezeptur in den selben Herstellungsprozeß zurückgeführt werden, ohne daß eine Qualitätseinbuße hingenommen werden muß. Bei Rezepturkorrekturen durch Zusatz von Bitumen und/oder Polymeren können ohne weiteres 60 Gew.-% Reststoffe zurückgeführt werden.

## Patentansprüche

1. Verfahren zur Wiederverwendung von Reststoffen bituminöser Dichtungsmaterialien, bei dem die Reststoffe bei Raumtemperatur vorzerkleinert und anschließend unter Bewegung aufgeschmolzen und homogenisiert werden, und die Schmelze im flüssigen Zustand gemahlen und, ggf. nach Einstellen der Stoffeigenschaften durch geeignete, übliche Zusätze, zu Dichtungsmaterialien verarbeitet wird, **dadurch gekennzeichnet**, daß die Vorzerkleinerung der Reststoffe auf eine Größe von maximal 10 x 10 cm in einer Schneidmühle oder Rotorschere durchgeführt wird, wobei die vorzerkleinerten Reststoffe durch Sieben in Vorschnitzel, Fertigschnitzel und Abrieb aufgetrennt werden, und die mit Trennmittel eingepuderten Vorschnitzel in die Vorzerkleinerung zurückgeführt werden, und die Schmelze auf eine Siebfeinheit von maximal 0,2 mm gemahlen wird.

2. Verfahren nach Anspruch 1, **dadurch gekennzeichnet**, daß die Vorschnitzel zusammen mit dem Materialabrieb und dem Staub aus der Filteranlage in die Schneidmühle zurückgeführt werden.

## Claims

1. A process for re-using residual substances of bituminous sealing materials, wherein the residual substances are pre-crushed at room temperature and are subsequently fused and homogenised whilst moving, and the melt is ground in liquid state and, optionally after adjusting the material properties by means of suitable conventional additives, is processed to form sealing materials, **characterized in that** the pre-crushing of the residual substances to a maximum size of 10 x 10 cm is carried out in a cutting mill or a rotary cutter, the pre-crushed residual substances being separated by sieving into rough chips, finished chips and grindings, and the rough chips powdered with separating agents are re-delivered for pre-crushing, and the melt is ground to a maximum sieve fineness of 0.2 mm.

2. A process in accordance with claim 1, **characterized in that** the rough chips together with the material grindings and the dust are delivered from the filtering installation back to the cutting mill.

## Revendications

1. Procédé pour la réutilisation ou le recyclage de résidus de matières d'étanchéité bitumineuses, procédé dans lequel les résidus sont soumis à une fragmentation préliminaire à température ambiante, puis sous agitation mis en fusion et homogénéisés, et les bains de fusions sont broyés à l'état liquide et éventuellement après mise au point des propriétés de la matière par des additifs appropriés usuels sont transformés en matières d'étanchéité, procédé caractérisé en ce que la fragmentation préalable des résidus à une taille de 10 X 10 cm maximum est effectuée dans un concasseur à lames ou dans une cisaille rotative, les résidus ayant été soumis à la fragmentation préalable sont séparés par criblage en rognures grossières, en rognures finales et en criblures, et les rognures grossières saupoudrées du produit de séparation sont ramenées dans la fragmentation préalable et le bain de fusion est concassé à une finesse de criblage de 0,2 mm maximum.

2. Procédé selon la revendication 1, caractérisé en ce que les rognures préalables conjointement avec les criblures et la poussière provenant de l'installation de filtrage sont ramenées dans le concasseur à lames.
